# EUROPÄISCHE PATENTANMELDUNG

(11) **EP 1 221 471 A1**
(43) Veröffentlichungstag der Anmeldung: **10.07.2002**
(21) Anmeldenummer: 01810022.2
(22) Anmeldetag: 09.01.2001
(51) Int. Cl.: C09J 179/08, C09J 163/02, C08L 63/00

(54) **Klebstoffmischung auf Basis eines Polyetherimid enthaltenden Epoxidharz**

(71) Anmelder: Alcan Technology & Management AG, 8212 Neuhausen am Rheinfall (CH)
(72) Erfinder: Die Erfindernennung liegt noch nicht vor

(57) **Zusammenfassung**

Eine Klebstoffmischung zum Heissverkleben von Substraten enthält neben einem Polymer noch wenigstens ein reaktives Komponentenpaar. Die Mischung enthält als Polymer bevorzugt Polyetherimid und als reaktive Komponente ein Epoxydharz und ein Amin als Härter. Das reaktive Komponentenpaar wirkt als temporärer Weichmacher. Ein bevorzugter Anwendungsbereich für die Klebstoffmischung ist das Verkleben von geschäumten Platten aus Polyetherimid mit Deckschichten aus Polyetherimid.

## Beschreibung

Die Erfindung betrifft eine Klebstoffmischung mit einem Polymer zum Heissverkleben von Substraten. Im Rahmen der Erfindung liegt auch die Verwendung der Klebstoffmischung zum Verkleben von geschäumten Platten aus Polyetherimid mit Deckschichten aus Polyetherimid.

Inneneinrichtungen von Flugzeugen werden heute zu einem grossen Teil aus Sandwich-Strukturbauteilen gefertigt. Ein bekanntes Beispiel hierfür sind Platten mit einem geschäumten Kern aus Polyetherimid und Deckschichten aus glas- oder kohlefaserverstärkten Deckschichten aus Polyetherimid. Damit die an die Bauteile gestellten hohen Brandanforderungen erfüllt werden können, muss auch dem zur Verklebung der Deckschichten mit dem geschäumten Kern eingesetzten Klebstoff Beachtung geschenkt werden. Ein üblicher Klebstoff auf Epoxydharzbasis erfüllt die Anforderungen nicht.

Aus der FR-A-2 766 834 ist eine Klebstoffmischung aus Polyetherimid und einem Weichmacher bekannt, welche den heutigen Brandanforderungen entspricht. Ein Nachteil dieses Klebstoffes liegt jedoch darin, dass wegen der Herabsetzung der Glasübergangstemperatur von Polyetherimid durch den Weichmacher die Temperatur der Presse zum Herausnehmen der Sandwich-Struktur herabgesetzt werden muss, was die Produktion und die Wirtschaftlichkeit des Klebeverfahrens beeinträchtigt.

Der Erfindung liegt daher die Aufgabe zugrunde, eine Klebstoffmischung der eingangs genannten Art bereitzustellen, welche die vorstehend erwähnten Nachteile der Klebstoffe nach dem Stand der Technik vermeidet.

Zur erfindungsgemässen Lösung der Aufgabe führt, dass die Mischung neben dem Polymer noch wenigstens ein reaktives Komponentenpaar enthält.

Das reaktive Komponentenpaar ist bevorzugt ausgewählt aus der Gruppe der Isocyanate / Polyole, Epoxyde / Amine oder Epoxyde / Anhydride.

Zweckmässigerweise ist zudem das Polymer mit den zu verklebenden Substraten chemisch verwandt.

Eine besonders bevorzugte Klebstoffmischung enthält als Polymer Polyetherimid und als reaktives Komponentenpaar ein Epoxydharz und ein Amin, d.h. ein Harz und ein Härter.

Das Mischverhältnis Epoxydharz / Polyetherimid liegt bevorzugt zwischen etwa 1 : 50 und 50: 1, vorzugsweise zwischen etwa 10 : 1 und 1 : 10.

Die erfindungsgemässe Klebstoffmischung eignet sich zum Verkleben von Substraten sowohl aus Kunststoff als auch aus Metall. Ein besonders bevorzugter Anwendungsbereich ist jedoch das Verkleben von geschäumten Platten aus Polyetherimid mit Deckschichten aus Polyetherimid.

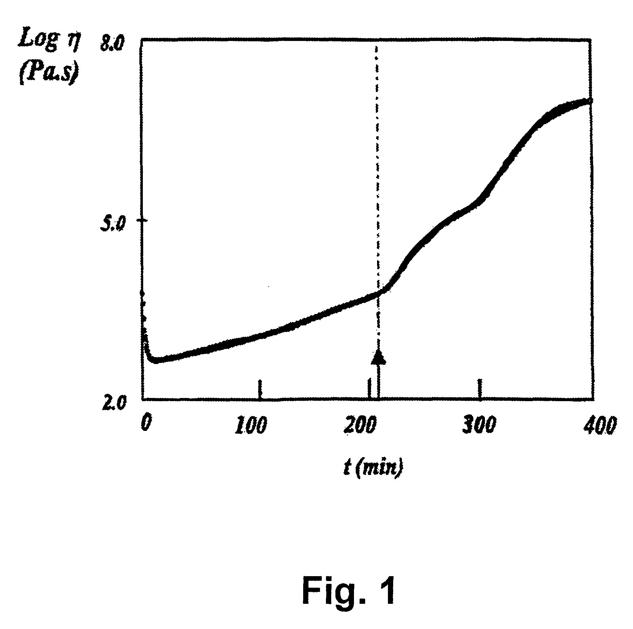

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in Fig. 1 den zeitlichen Verlauf der Viskosität für eine Klebstoffmischung mit 33% PEI bei 135°C.

### 1. Klebstoffmischung

Zur Herstellung von Klebstoffmischungen wurden die folgenden vier Substanzen eingesetzt:

| | |
|---|---|
| Polyetherimid | PEI |
| 4,4'-Methylenbis(3-chlor-2,6-diethylanilin) | M-CDEA |
| Bisphenol A Epoxydharz | DGEBA |
| 1-Methyl-2-pyrrolidon | NMP |

Das Polymer PEI lag in Pulverform vor. M-CDEA ist ein handelsüblicher aromatischer Diaminhärter, der zusammen mit dem Diepoxyd-Prepolymer DGEBA ein reaktives Komponentenpaar bildet. NMP ist ein gutes Lösungsmittel für Polyetherimid.

Durch Variation des Anteils von NMP am gesamten Feststoffgehalt kann die Konsistenz der Klebstoffmischung in einem weiten Bereich von spachtelbar bis spritzbar geändert werden.

Aus den vorstehend erwähnten Ausgangsmaterialien wurden zwei Klebstoffmischungen mit 45% bzw. 80% PEI zubereitet.

### 1.1. Klebstoffmischung mit 45% PEI

NMP wurde in einem Ölbad auf 170°C erwärmt. Anschliessend wurde M-CDEA unter kräftigem Rühren bis zur vollständigen Lösung zugegeben. Nachfolgend wurde PEI zur vollständigen Lösung eingetragen. Zur Vermeidung eines zu hohen Reaktionsgrades zwischen M-CDEA und DGEBA wurde die Temperatur vor der Zugabe von DGEBA auf 100°C abgesenkt. Die fertige Lösung wurde 10 min bei dieser Temperatur belassen und anschliessend aus dem Ölbad entfernt. Die Mengen von M-CDEA und DGEBA sind stöchometrisch, d.h. das Verhältnis Aminfunktion/Epoxyfunktion ist gleich 1. Die Menge an PEI entspricht 45% der Gesamtmenge der Feststoffe. Die verwendete Menge Lösungsmittel entsprach etwa der doppelten Menge aller anderen Komponenten, was zu einer flüssigen Lösung führte. Die Zusammensetzung der Klebstoffmischung mit 45% PEI geht aus Tabelle 1 hervor.

**Tabelle 1.**

| Zusammensetzung der Klebstoffmischung mit 45% PEI | |
|---|---|
| DGEBA | 27,5 Gew.-% des gesamten Feststoffanteils |
| M-CDEA | 27,5 Gew.-% des gesamten Feststoffanteils |
| PEI | 45 Gew.-% des gesamten Feststoffanteils |
| NMP | 200 Gew.-% des gesamten Feststoffanteils |

### 1.2. Klebstoffmischung mit 80% PEI

Die Lösung konnte bei Raumtemperatur zubereitet werden. Die Bereitstellung der Klebstoffmischung mit 80% PEI erfolgte auf gleiche Weise unter Rühren wie die oben beschriebene Herstellung der Klebstoffmischung mit 45% PEI. Die Menge an PEI entspricht 80% des gesamten Feststoffanteils. Um eine streichbare Paste zu erhalten, wurde weniger Lösungsmittel vorgelegt. Die Zusammensetzung der Klebstoffmischung mit 80% PEI geht aus Tabelle 2 hervor.

**Tabelle 2.**

| Zusammensetzung der Klebstoffmischung mit 80% PEI | |
|---|---|
| DGEBA | 10 Gew.-% des gesamten Feststoffanteils |
| M-CDEA | 10 Gew.-% des gesamten Feststoffanteils |
| PEI | 80 Gew.-% des gesamten Feststoffanteils |
| NMP | 100 Gew.-% des gesamten Feststoffanteils |

### 2. Herstellung von Sandwichplatten

Es wurden Klebversuche mit geschäumten Platten aus PEI und Deckschichten aus glasfaserverstärktem PEI durchgeführt. Die geschäumten PEI-Platten wiesen eine Dichte von 60 kg/m³ auf. Die Deckschichten wurden in ein- und zweilagiger Ausführung eingesetzt. Die einlagige Deckschicht hatte ein Flächengewicht von 455 g/m², davon 300 g/m² Glasfasern; die zweilagige Ausführung wog das Doppelte. Die mechanischen Eigenschaften der verschiedenen Komponenten sind in Tabelle 3 zusammengestellt.

**Tabelle 3.**

| Mechanische Eigenschaften des Kerns und der einlagigen Deckschicht aus PEI | | |
|---|---|---|
| Geschäumter Kern | Druckfestigkeit [MPa] | 0,7 |
| | Druckmodul [MPa] | 33 |
| | Schubfestigkeit [MPa] | 0,7 |
| | Schubmodul [MPa] | 18 |
| Deckschicht | Zugfestigkeit [MPa] | 250 |
| | Zugmodul [GPa] | 22 |
| | Druckfestigkeit [MPa] | 350 |

### 2.1. Sandwichplatte, geklebt mit der 45% PEI-Klebstoffmischung

Die Klebstoffmischung wurde auf die Deckschichten aufgetragen. Um die genaue Menge des aufgetragenen Klebstoffs zu bestimmen, wurde ein Spachtel zum Klebstoffauftrag verwendet. Diese Klebstoffmischung war jedoch flüssig genug, um mit einer Bürste oder mit einer Rolle aufgetragen zu werden. Die mit Klebstoff beschichteten Deckschichten wurden bis zur Verdampfung des Lösungsmittels in einem Ofen belassen. Anschliessend wurden die Deckschichten beidseitig an die geschäumte Platte angelegt und die Anordnung wurde in einer Presse bei 160°C und unter einem hydraulischen Druck zwischen 3,2 und 6,4 bar zu einer Sandwichplatte einer Dicke von 7 mm gepresst. Nach 10 min wurde die Presse auf 140°C abgekühlt und die Sandwichplatte entnommen. Die zu Versuchszwecken hergestellten Platten waren 140 mm breit, 220 mm lang und 7 mm dick.

### 2.2. Sandwichplatte, geklebt mit der 80% PEI-Klebstoffmischung

Da diese Klebstoffmischung nur wenig Lösungsmittel enthält, wurde diese mit einem Spachtel auf die Deckschichten aufgetragen. Die Deckschichten wurden in einem Ofen unter gleichen Bedingungen getrocknet wie oben bei der Klebstoffmischung mit 45% PEI. Anschliessend wurden die Deckschichten beidseitig an die geschäumte Platte angelegt und die Anordnung wurde in einer Presse bei einer Temperatur von 160°C und einem hydraulischen Druck zwischen 3,2 und 6,4 bar zu einer Sandwichplatte einer Dicke von 10 mm gepresst. Nach 120 min wurde die Sandwichplatte ohne vorgängige Abkühlung der Presse entnommen, wie dies auch bei einer Plattenproduktion erfolgen würde. Die erhaltenen Sandwichplatten waren 130 mm breit, 200 mm lang und 10 mm dick.

### 3. Die Wirkungsweise des erfindungsgemässen Klebstoffsystems

Das dem PEI beigemischte reaktive Komponentenpaar DGEBA / M-CDEA wirkt wie ein temporärer Weichmacher. Unterhalb der Glasübergangstemperatur T_{g} haben die Epoxy-Moleküle keine zur Vernetzung ausreichende Beweglichkeit. Oberhalb T_{g} können sie jedoch diffundieren und zusammen reagieren. Sobald die Reaktion gestartet ist, bildet sich durch die Ausscheidung des Reaktionsproduktes der Epoxy- und Amin-Moleküle in der PEI-Matrix eine zweite Phase. Wenn das Klebstoffsystem auf eine Temperatur grösser als T_{g} aufgeheizt wird, verändert sich seine Viskosität in Abhängigkeit von der Zeit. In einem ersten Schritt nimmt die Viskosität als Folge der Erhöhung der Temperatur ab. Sobald nun die Temperatur einen konstanten Wert annimmt, steigt die Viskosität schwach an, bis die Phasentrennung eintritt. Zu diesem Zeitpunkt steigt die Viskosität zweistufig schnell an und erreicht einen konstanten Wert. Dieser in Fig. 1 dargestellte zeitliche Verlauf der Viskosität η lässt sich damit erklären, dass mit fortschreitender Reaktion zwischen DGEBA und M-CDEA immer weniger Weichmacher in der PEI-Matrix vorhanden ist. Im ersten Teil bildet DGEBA und M-CDEA Nester in der PEI-Matrix, und es erfolgt eine Diffusion von DGEBA und M-CDEA zu diesen Nestern. Im weiteren Verlauf werden andere, viel kleinere Epoxy-Nester ausgeschieden, solange Diffusionsvorgänge möglich sind. Im zweiten Teil erfolgt gegen das Ende der Epoxy-Reaktion der Übergang der PEI-Matrix in den Glaszustand. Schlussendlich erreicht die Viskosität des Systems diejenige von PEI.

Neben den bereits oben erwähnten Vorteilen des erfindungsgemässen Klebstoffsystems führt dieses auch zu einer gegenüber Systemen nach dem Stand der Technik wesentlich besseren Haftung, worauf weiter unten eingegangen wird.

### 4. Versuchsergebnisse

Zur Bestimmung der Haftung zwischen Kern und Deckschicht wurden Abschältests durchgeführt. Die Ergebnisse sind in Tabelle 4 zusammengestellt. Als Vergleichsbeispiel diente ein Klebstoff gemäss der FR-A-2 766 834.

**Tabelle 4.**

| Vergleich der Adhäsionskraft zwischen Kern und Deckschicht | | | | |
|---|---|---|---|---|
| Deckschichttyp/ Klebstoff | Probenbreite [mm] | Flächengewicht des Klebstoffes [g/m²] | Maximale Schälkraft [N] | Adhäsions-stärke [J/m²] |
| zweilagig / FR-A-2766834 | 20,03 | 120 | 12,11 | 277,5 |
| einlagig / 45% PEI-Epoxy | 20,11 | 81 | 15,11 | 525,7 |
| zweilagig / 45% PEI-Epoxy | 19,73 | 120 | 11,55 | 386,1 |
| einlagig / 80% PEI-Epoxy | 19,91 | 84 | 13,9 | 451,6 |
| zweilagig / 80% PEI-Epoxy | 19,98 | 83 | 11,38 | 426,4 |

Im allgemeinen wird eine Adhäsionskraft von 400 J/m² als ausreichend für Sandwichplatten angesehen. Die Ergebnisse in Tabelle 7 zeigen deutlich die Überlegenheit der erfindungsgemässen Klebstoffmischungen gegenüber dem Klebstoff gemäss der FR-A-2 766 834.

Weitere Untersuchungen haben gezeigt, dass die mit der erfindungsgemässen Klebstoffmischungen verklebten PEI-Sandwichplatten den Brandanforderungen nach FAR 25.853/ABD 0031 entsprechen.

## Patentansprüche

1. Klebstoffmischung mit einem Polymer zum Heissverkleben von Substraten,
**dadurch gekennzeichnet, dass**
die Mischung neben dem Polymer noch wenigstens ein reaktives Komponentenpaar enthält.

2. Klebstoffmischung nach Anspruch 1, **dadurch gekennzeichnet, dass** das reaktive Komponentenpaar ausgewählt ist aus der Gruppe der Isocyanate / Polyole, Epoxyde / Amine oder Epoxyde / Anhydride.

3. Klebstoffmischung nach Anspruch 1 oder 2, **dadurch gekennzeichnet, dass** das Polymer mit den zu verklebenden Substraten chemisch verwandt ist.

4. Klebstoffmischung nach einem der Ansprüche 1 bis 3, **dadurch gekennzeichnet, dass** die Mischung als Polymer Polyetherimid und als reaktives Komponentenpaar ein Epoxydharz und ein Amin enthält.

5. Klebstoffmischung nach Anspruch 4, **dadurch gekennzeichnet, dass** das Mischverhältnis Epoxydharz / Polyetherimid zwischen etwa 1 : 50 und 50 : 1, vorzugsweise zwischen etwa 10 : 1 und 1 : 10 liegt.

6. Verwendung einer Klebstoffmischung nach Anspruch 4 oder 5 zum Verkleben von geschäumten Platten aus Polyetherimid mit Deckschichten aus Polyetherimid.
